# EUROPEAN PATENT APPLICATION

(11) **EP 3 836 410 A1**
(43) Date of publication of application: **16.06.2021**
(21) Application number: 19848707.6
(22) Date of filing: 10.07.2019
(51) Int. Cl.: H04B 1/74, B66B 3/00, H04B 17/00, H04W 12/12

(54) **DETERMINATION SYSTEM AND METHOD**

(30) Priority: 10.08.2018 JP 2018152041
(71) Applicant: Hitachi, Ltd., Tokyo 100-8280 (JP)
(72) Inventor: KANZAKI, Hajime, Tokyo 100-8280 (JP); SAITO, Toshiyuki, Tokyo 100-8280 (JP); MATSUMOTO, Youhei, Tokyo 100-8280 (JP); HOSHINO, Takamichi, Tokyo 100-8280 (JP); MATSUKUMA, Toshiharu, Tokyo 100-8280 (JP); SAITO, Yuki, Tokyo 100-8280 (JP)
(74) Representative: Mewburn Ellis LLP
(86) International application number: PCT/JP2019/027391
(87) International publication number: WO 2020/031605

(57) **Abstract**

A method disclosed herein is provided with a first step in which, upon occurrence of a predetermined first event, a radio signal transmitting unit transmits a radio signal carrying a piece of information corresponding to the first event to a signal comparison unit and, upon occurrence of the first event or a second event occurring simultaneously or virtually simultaneously with the first event, a wired signal transmitting unit transmits a wired signal carrying a piece of information corresponding to the first or second event to the signal comparison unit and a second step in which the signal comparison unit judges reliability of the radio signal based on the radio signal and the wired signal, arranged such that, in the second step, the signal comparison unit judges reliability of the radio signal based on the pieces of information respectively carried by the radio signal and the wired signal and a temporal difference between reception timings of the radio signal and the wired signal.

## Description

### Technical Field

The present invention relates to a judgment system and method and is favorably applied to, particularly, a radio signal reliability judgment system to judge reliability of radio signals.

### Background Art

In elevator equipment, conventionally, a control board that controls overall operation of the equipment is installed in a machine room disposed at the top of a hoistway. Connection between the control board and a car that moves up and down inside the hoistway is made via a cable called a traveling cable and communication between the control board and the car is performed via the traveling cable.

By the way, in recent years, there is an increasing demand for skyscrapers because of population concentration in urban areas and, consequently, demand for high-rise elevators also increases. In such circumstances, a traveling cable has to run over a long distance and this causes problems as follow: increasing in size of a drive mechanism to respond to an increase in the mass of a traveling cable; an enlarged risk of failure due to an increase in physical swing width of a traveling cable; and increasing in lead time for manufacturing a long traveling cable to run over a long distance, among others.

These problems can be solved by implementing communication between the control board and the car by radio communications. Meanwhile, control signals for elevator equipment need to have stable and high reliability inside a building in which the elevator equipment operates. Nevertheless, radio communications may suffer from interference that causes signal quality to deteriorate or access from a malicious person, thereby bringing about a possibility that impersonation occurs; in such situations, it is feared that passengers may be put under threat by malfunction of the elevator equipment. Hence, when communication between the control board and the car is implemented by radio communications, it is required to verify reliability of radio signals communicated between the control board and the car before and during operation of an elevator.

In this regard, a technology for verifying reliability of radio signals is disclosed in Patent Literature (PTL) 1 according to which a device having both radio and wired channels transmits identical signals through each of these channels and it is verified whether these signals match at the receiving side. Also, a technology for verifying reliability of radio signals is disclosed in Patent Literature 2 according to which a transmitter transmits a signal, a response to which is required, through a wired channel to a device that connects with it via a radio communication channel and a comparison is made between a signal transmitted through the wired channel and a response signal transmitted by radio.

### Citation List

### Patent Literature

Patent Literature 1: Japanese Patent Application Laid-Open No. 2000-196504
Patent Literature 2: Japanese Patent Application Laid-Open No. Hei11-225121

### Summary of Invention

### Technical Problem

However, in a case where radio communication between the car and the control board is implemented, there is a problem in which the technology of Patent Literature 1 is not applicable, because no wired channel exists. Besides, the technology of Patent Literature 2 is capable of detecting a deterioration in radio signal quality due to interference or others; nevertheless, in case the device suffers from impersonation by which it is possible to transmit a response to a signal, it cannot be detected that an illegal response is transmitted by impersonation and, therefore, a purpose of judging reliability of radio signals cannot be achieved.

The prevent invention has been developed in view of the foregoing issues and is intended to propose a judgment system and method capable of accurately and exactly judging whether or not signal quality is deteriorated by interference or others and whether or not a radio signal is affected by impersonation.

### Solution to Problem

To solve the above-noted problems and in accordance with the present invention, a judgment system for judging reliability of radio signals is provided with a signal comparison unit that compares signals, a radio signal transmitting unit that, upon occurrence of a predetermined first event, transmits a radio signal carrying a piece of information corresponding to the first event to the signal comparison unit, and a wired signal transmitting unit that, upon occurrence of the first event or a second event occurring simultaneously or virtually simultaneously with the first event, transmits a wired signal carrying a piece of information corresponding to the first or the second event to the signal comparison unit, the judgment system being arranged such that the signal comparison unit judges reliability of the radio signal based on the pieces of information respectively carried by the radio signal and the wired signal and a temporal difference between reception timings of the radio signal and the wired signal.

Also in accordance with the present invention, a judgment method for judging reliability of radio signals includes a first step in which, upon occurrence of a predetermined first event, a radio signal transmitting unit transmits a radio signal carrying a piece of information corresponding to the first event to a signal comparison unit and, upon occurrence of the first event or a second event occurring simultaneously or virtually simultaneously with the first event, a wired signal transmitting unit transmits a wired signal carrying a pieces of information corresponding to the first or the second event to the signal comparison unit and a second step in which the signal comparison unit judges reliability of the radio signal based on the radio signal and the wired signal, the judgment method being arranged such that, in the second step, the signal comparison unit judges reliability of the radio signal based on the pieces of information respectively carried by the radio signal and the wired signal and a temporal difference between reception timings of the radio signal and the wired signal.

### Advantageous Effects of Invention

According to the present invention, it is possible to accurately and exactly judge whether or not signal quality is deteriorated by interference or others and whether or not a radio signal is affected by impersonation.

### Brief Description of Drawings

Figure 1 is an outlined diagram depicting a structure of elevator equipment with its main parts according to an embodiment disclosed herein.
Figure 2 is a block diagram simply depicting an example of configurations of the main parts of the elevator equipment according to the present embodiment.
Figure 3 is a block diagram simply depicting another example of configurations of the main parts of the elevator equipment according to the present embodiment.
Figure 4 is a flowchart illustrating a processing procedure of signal comparison processing.
Figure 5 is a flowchart illustrating a processing procedure of elevator control processing.
Figure 6 is a diagram illustrating a sequence that represents a flow of processing when a radio signal has reliability.
Figure 7 is a diagram illustrating a sequence that represents a flow of processing when a radio signal has no reliability.
Figure 8 is a conceptual diagram provided to explain another embodiment.

### Description of Embodiments

In the following, one embodiment of the present invention will be described with respect to the drawings.

### (1) Structure of elevator equipment according to an embodiment disclosed herein

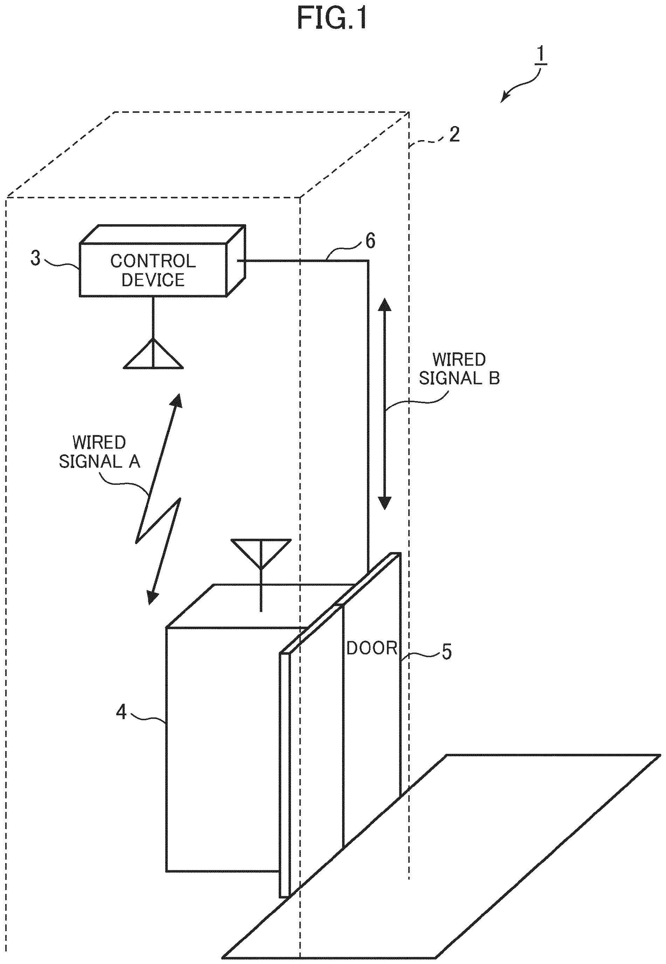

Fig. 1 depicts an outlined structure of elevator equipment 1 with its main parts according to an embodiment disclosed herein. This elevator equipment 1 is configured including a control device 3 that is installed in a machine room disposed at the top of a hoistway 2 and controls overall operation of the elevator equipment 1, a car 4 that moves up and down inside the hoistway 2 under control of the control device 3, and a door (which is hereinafter referred to as a floor door) 5 located at an elevator hall on each floor.

In this elevator equipment 1, no connection is made by a traveling cable between the control device 3 and the car 4 and information communication between the control device 3 and the car 4 is performed by radio communications. Besides, the control device 3 and the floor door 5 are interconnected via a cable 6 and information communication between the control device 3 and the floor door 5 is performed by wired communications via this cable 6.

Besides, when the elevator equipment 1 performs door opening or closing, both the door of the car 4, not depicted, (which is hereinafter referred to as the car's door) and the floor door 5 are driven to open or close at the same time. At this moment, from both the car 4 and the floor door 5, door open or close signals that carry pieces of information depending on an action (door opening or closing) occurring at this point of time are transmitted to the control device 3. That is, in this elevator equipment 1, with respect to a physical action of door opening or closing, the car 4 transmits a door open or close signal as a radio signal A and the floor door 5 transmits a door open or close signal as a wired signal B to the control device 3, and these signals carry identical pieces of information. Therefore, the pieces of information carried respectively by the radio signal A and the wired signal B received by the control device 3 are expected to match as information that is either door opening or door closing.

Hereupon, the radio signal A that is transmitted from the car 4 to the control device 3 has a larger transmission delay than the wired signal B that is transmitted from the floor door 5 to the control device 3 and, therefore, the radio signal arrives at the control device 3 at a certain time later than the arrival of the wired signal B. If the radio signal A suffers from a significant deterioration in signal quality, a temporal difference between reception timing of the wired signal B and reception timing of the radio signal A becomes larger and there is a possibility that an error occurs in the piece of information carried by the radio signal. Therefore, by comparing the temporal difference between the reception timings of the radio signal A and the wired signal B and the pieces of information carried respectively by the signals, it can be verified whether the quality of the radio signal A deteriorates.

Furthermore, assuming a case where the radio signal A is affected by impersonation by a malicious person, because it is very hard to synchronize timing of transmitting the radio signal A with occurrence of a physical action of door opening or closing, it can be checked whether the signal is free from impersonation by comparing the reception timings of the radio signal A and the wired signal B.

In the present elevator equipment 1, as described above, it is possible to detect that a radio signal A is unreliable for both cases of deterioration in quality of the radio signal A due to interference or others and deterioration in reliability of the radio signal A affected by impersonation, based on the reception timings when the control device 3 receives the radio signal A transmitted from the car 4 to the control device 3 and the radio signal A transmitted from the floor door 5 to the control device 3 and the pieces of information (door opening or closing) carried respectively by the signals.

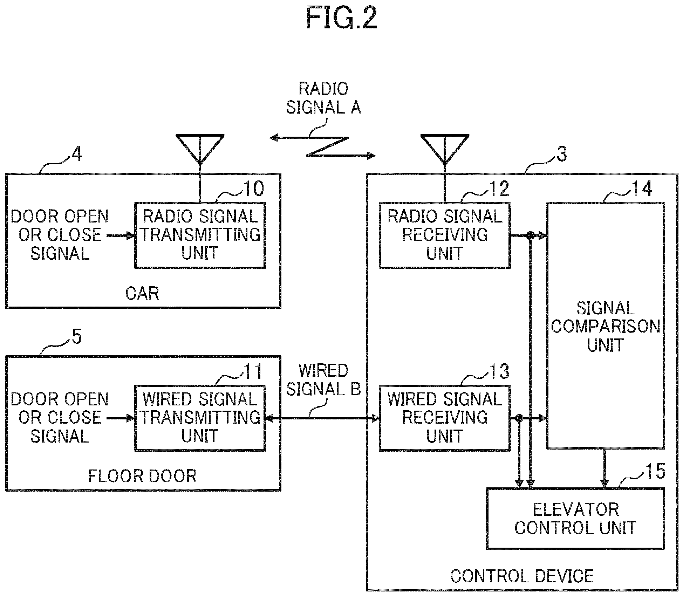

Fig. 2 depicts simplified functional configurations of the main parts of the present elevator equipment 1. As depicted in Fig. 2, in the car 4, a door open or close signal is generated by a signal generating unit, not depicted, when its door opens or closes and, in a radio signal transmitting unit 10, this signal is converted to a radio signal A having a form prescribed by a predefined radio communication standard, such as IEEE (Institute of Electronics Engineers) 802.11, 3GPP (3^{rd} Generation Partnership Project), Wi-Fi (Wireless Fidelity), or LTE (Long Term Evolution), and transmitted to the control device 3. In this transmission, the car 4 transmits the radio signal A carrying a piece of information that differs between when the door opens and when the door closes.

On the other hand, in the floor door 5, a door open or close signal is generated by a signal generating unit, not depicted, when the door opens or closes and, in a wired signal transmitting unit 11, this signal is converted to a wired signal prescribed by a predefined wired communication standard, such as an electric communication standard, e.g., Ethernet prescribed in IEEE 802.3 or RS (Recommended-Standards) -485 or an optical communication standard, and transmitted to the control device 3. In this transmission, the floor door 5 transmits the wired signal B carrying a piece of information that differs from between when the door opens and when the door closes.

The control device 3 decodes a radio signal A transmitted from the car 4 in a radio signal receiving unit 12 and inputs a result of the decoding to a signal comparison unit 14. The control device 3 also decodes a wired signal B transmitted from the floor door 5 in a wired signal receiving unit 13 and inputs a result of the decoding to the signal comparison unit 14.

The signal comparison unit 14 compares the radio signal A given from the radio signal receiving unit 12 and the wired signal B given from the wired signal receiving unit 13 and verifies reliability of the radio signal A. Specifically, the signal comparison unit 14 judges whether there is a match between the pieces of information (door opening or closing) carried respectively by the radio signal A and the wired signal B and whether or not the temporal difference between the reception timing of the wired signal B and the reception timing of the radio signal A falls within a preset amount of time. Then, if a negative result is obtained by this judgment, the signal comparison unit 14 judges that the radio signal A is unreliable and transmits a notification that the radio signal A is unreliable to an elevator control unit 15.

The elevator control unit 15 is a functional unit equipped with a function of controlling operation of the elevator equipment 1 based on a radio signal A that is given from the radio signal receiving unit 12, a wired signal B that is given from the wired signal receiving unit 13, and a notification that is given from the signal comparison unit 14.

If a notification from the signal comparison unit 14 is information that the radio signal A is unreliable, this elevator control unit 15 controls the elevator equipment 1 as a whole to perform an operation in case of abnormality detection, such as forcing the car 10 to stop at a nearby floor.

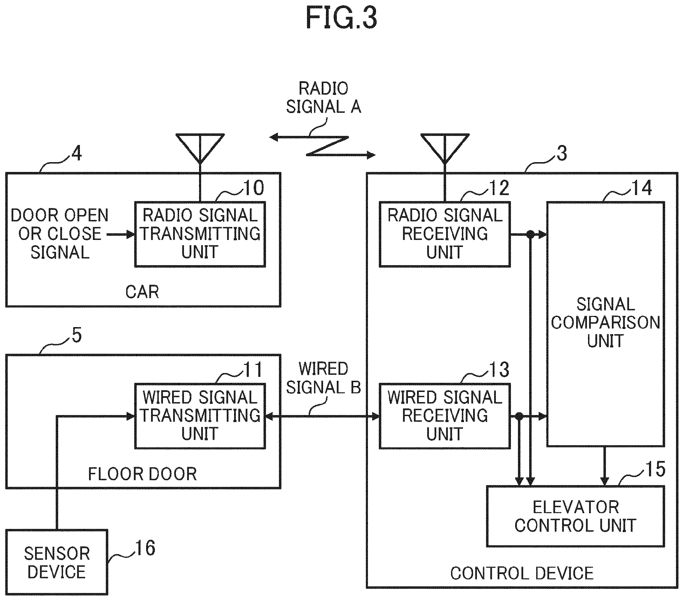

Additionally, a signal that is used for control by the elevator control unit 15 can be any signal required to control the elevator equipment 1 as a whole; it should not be limited to a door open or close signal that is generated by a signal generating unit not depicted. For example, as is depicted in Fig. 3, a sensor signal that is output from a sensor device 16 such as a door sensor that detects opening and closing of the floor door 5 may be transmitted as a wired signal B to the control device 3 and the control device may verify reliability of a radio signal A based on this wired signal B and the radio signal A that is transmitted from the car 4.

Furthermore, with respect to the same physical action (e.g., a passenger enters the car 4) other than door opening or closing, the car 4 may transmit a radio signal A to the control device 3 and the floor door 4 may transmit a wired signal B to the control device 3, and the control device 3 may verify reliability of the radio signal A based on these radio signal A and wired signal B.

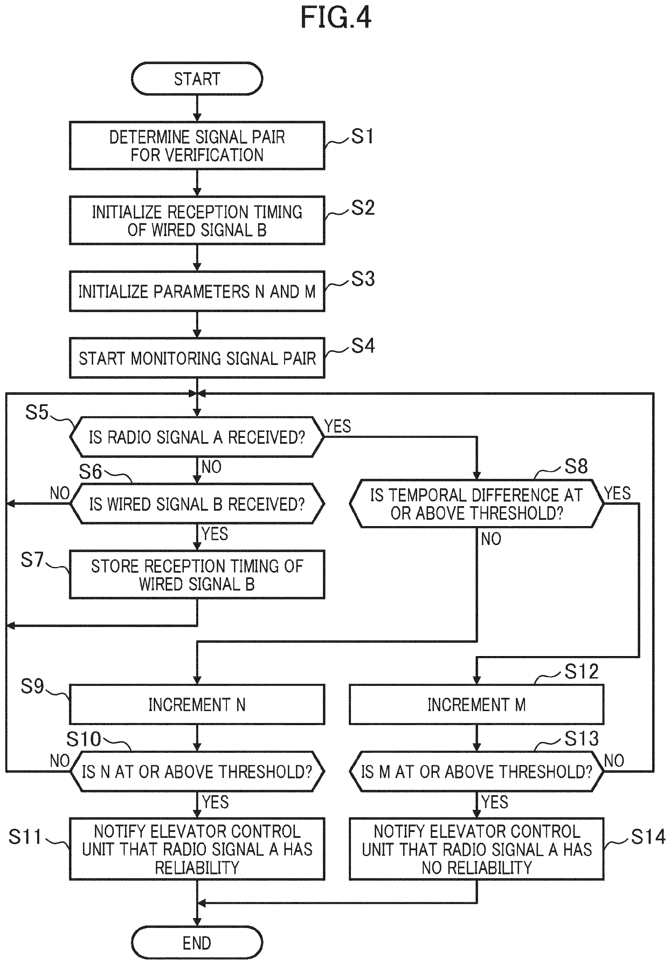

Fig. 4 illustrates a flow of a series of steps of processing (which is hereinafter referred to as signal comparison processing) that is performed by the signal comparison unit 14 of the control device 3 in connection with judging reliability of a radio signal A as described in the foregoing context.

The signal comparison unit 14 periodically starts this signal comparison processing and first determinates a radio signal A and a wired signal B for use to verify reliability of a radio signal A to be verified (S1). A radio signal A and a wired signal B that are used here can be any pair of signals like, e.g., door open or close signals with respect to a physical action for which a radio signal A is generated in the car 4 side and a wired signal B is generated in the floor door 5 side.

Therefore, besides door opening or closing, this is also applicable for a case where, e.g., sensors for human detection are installed in the car 4 and the floor door 5 respectively and, when a sensor in the car 4 side and a sensor in the floor door 5 side have detected an elevator user entering or leaving the car 4, respective signals output from each sensor are transmitted by radio and wire, respectively, to the control device 3.

Subsequently, the signal comparison unit 14 initializes reception timing of the wired signal B (S2). An initial value of the reception timing should preferably be a small value such as 0. The signal comparison unit 14 also initializes parameters M and N which will be described later to 0, respectively (S3). In this regard, a parameter N is the parameter for counting the number of times the radio signal A has been judged reliable and a parameter M is the parameter for counting the number of times the radio signal A has been judged unreliable.

Subsequently, the signal comparison unit 14 starts monitoring the radio signal A and the wired signal B (S4) and then waits for receiving the radio signal A and the wired signal B (S5, S6) . Then, upon receiving the wired signal B (S6; Yes), the signal comparison unit 14 acquires and stores the current reception timing (e.g., a time of receipt and a count value of a timer that started counting at step S4) (S7) and then returns to step S5.

Subsequently, upon further receiving the radio signal A (S5; Yes), the signal comparison unit 14 judges whether there is a match between a piece of information carried by the radio signal A and a piece of information carried by the wired signal B received at the preceding step S6, and whether or not the temporal difference between reception timing of the wired signal B and reception timing of the radio signal A is at or above a preset threshold (which is hereinafter referred as a receipt time difference threshold) (S8).

In this regard, the receipt time difference threshold is a value preset by user for the signal comparison unit 14 as a threshold of the temporal difference between reception time of a wired signal B and reception timing of a radio signal A in a case where the radio signal A is reliable. However, the receipt time difference threshold may not be a fixed value, but may be a value that varies dynamically depending on radio signal A reception timing. For instance, when it could be confirmed that a radio signal A can be received with a temporal difference that is substantially smaller than the receipt time difference threshold from the reception of a wired signal B, the signal comparison unit 14 may change the receipt time difference threshold to a smaller value.

Here, a negative result that is obtained from the judgment at step S8 means that the currently received radio signal A is reliable. Thus hereupon, the signal comparison unit 14 increments the parameter N (by one) (S9) and then judges whether or not the value of the parameter N has become at or above a threshold preset for the N parameter (which is hereinafter referred to as a threshold of the number of times reliability has been verified) (S10). In this regard, the threshold of the number of times reliability has been verified is a value preset by user for the signal comparison unit 14 as the number of times by which the radio signal A will finally be judged reliable.

If a negative result is obtained from this judgment, the signal comparison unit 14 returns to step S5 and then executes the step S5 and subsequent steps of processing in the same way as described above. If a positive result is obtained from the judgment at step S10, the signal comparison unit 14 notifies the elevator control unit 15 that the radio signal A has reliability (the radio signal A is reliable) (S11). However, if the radio signal A is judged to have reliability, the control itself of the elevator equipment 1 is presumed to be performed normally and, therefore, the processing of step S11 may be skipped. Subsequently, the signal comparison unit 14 terminates this signal comparison processing.

Conversely, a negative result that is obtained from the judgment at step S8 means that the currently received radio signal A is unreliable. Thus hereupon, the signal comparison unit 14 increments the parameter M (S12) and then judges whether or not the value of the parameter M has become at or above a threshold preset for the parameter M (which is hereinafter referred to as a threshold of the number of times reliability has been denied) (S13) . In this regard, the threshold of the number of times reliability has been denied is a value preset by user for the signal comparison unit 14 as the number of times by which the radio signal A will finally be judged unreliable.

If a negative result is obtained from this judgment, the signal comparison unit 14 returns to step S5 and then executes the step S5 and subsequent steps of processing in the same way as described above. If a positive result is obtained from the judgment at step S13, the signal comparison unit 14 notifies the elevator control unit 15 that the radio signal A has no reliability (the radio signal A is unreliable) (S14) and then terminates this signal comparison processing.

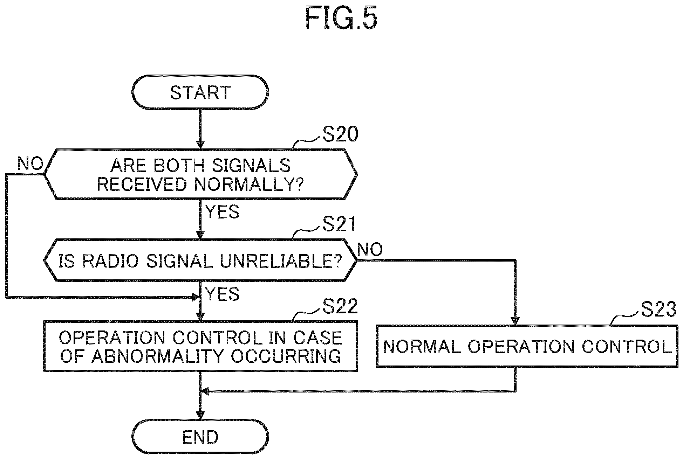

Additionally, when a radio signal A cannot be received after reception of a wired signal B, the elevator equipment 1 becomes unable to perform control. As will be described later with regard to Fig. 5, abnormality is detected by the elevator control unit 15 and overall operation of the elevator equipment 1 is controlled to perform an operation in case of abnormality detection.

Furthermore, in the foregoing signal comparison processing, there may be multiple pairs of a radio signal A and a wired signal B for comparison. In this case, the processing in Fig. 4 should be performed for each pair, respectively. If a radio signal A is judged unreliable for as many pairs as a preset threshold number or more, the signal comparison unit 14 should notify the elevator control unit 15 that the radio signal A has no reliability.

Fig. 5 illustrates the contents of elevator control processing that is performed by the elevator control unit 15 having received both a radio signal A and a wired signal B. Upon receiving both a radio signal A and a wired signal B, the elevator control unit 15 starts this elevator control processing illustrated in Fig. 5 and first judges whether or not both the radio signal A and the wired signal B could be received normally (S20).

For instance, if a periodic signal cannot be received for a threshold length of time or longer, it is judged abnormal. However, in a case where verifying whether or not signal quality required to control the elevator equipment 1 is satisfied is performed independently for each channel (a radio signal A channel and a wired signal B channel), respectively, the processing of step S20 may be skipped.

If a negative result is obtained from the judgment at step S20, then the elevator control unit 15 proceeds to step S22. Conversely, if a positive result is obtained from the judgment at step S20, a judgment is made as to whether a notification that the radio signal A has no reliability is given from the signal comparison unit 14 (S21).

A negative result that is obtained at this step S21 means that it can be estimated that the communication condition is normal and the radio signal A is not affected by impersonation or the like. Thus hereupon, the elevator control unit 15 performs normal operation control of the elevator equipment 1 (S23) and then terminates the elevator control processing.

Conversely, a positive result that is obtained from the judgment at step 21 means that, although the communication condition is normal, it is feared that the radio signal A is affected by impersonation or the like. Thus hereupon, the elevator control unit 15 controls operation of the elevator equipment 1 to perform an operation in case of abnormality detection (S22) and then terminates the elevator control processing.

Additionally, as "an operation in case of abnormality detection" at step S22, diverse operations can be applied. For example, applicable are an operation that puts the car 4 in emergency stop and an operation that slowly moves the car to a nearby floor, opens the door, and maintains the car remaining stopped, among others.

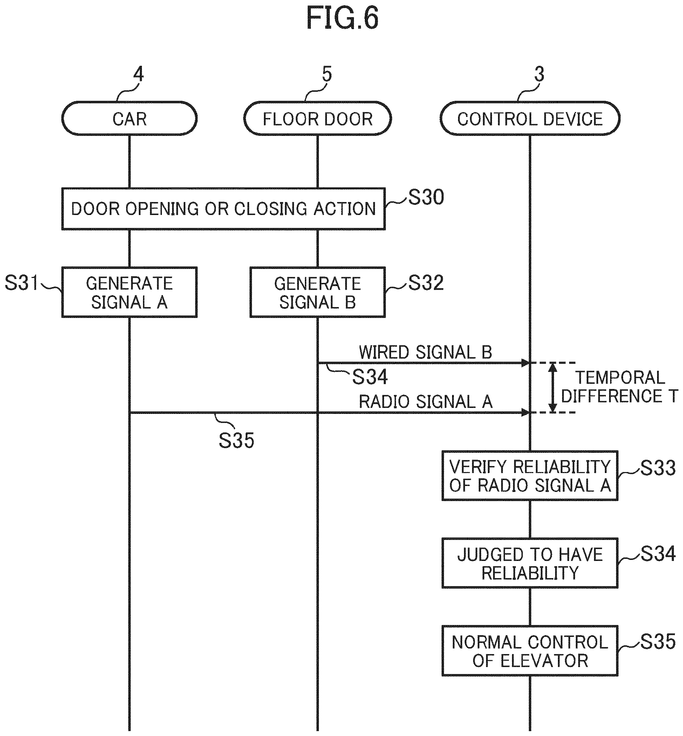

Fig. 6 illustrates a flow of processing when the radio signal A has reliability in the present elevator equipment 1. When both the car 4 and the floor door 5 are actuated to perform a door opening or closing action, the car 4 generates a radio signal A (S31) and transmits it by radio to the control device 3 (S35) . At the same time, the floor door 5 also generates a wired signal B (S32) and transmits it by wire to the control device 3 (S34).

Upon receiving both the radio signal A and the wired signal B, the control device 3 verifies reliability of the radio signal A based on whether there is a match between the pieces of information respectively carried by these signals and whether or not the temporal difference T between the reception timings of these signals is below the receipt time difference threshold mentioned previously (S33). If the temporal difference T between the reception timings of the radio signal A and the wired signal B is below the receipt time threshold, then the control device 3 judges that the radio signal A has reliability (S34) and controls the elevator equipment 1 to perform normal operation (S35).

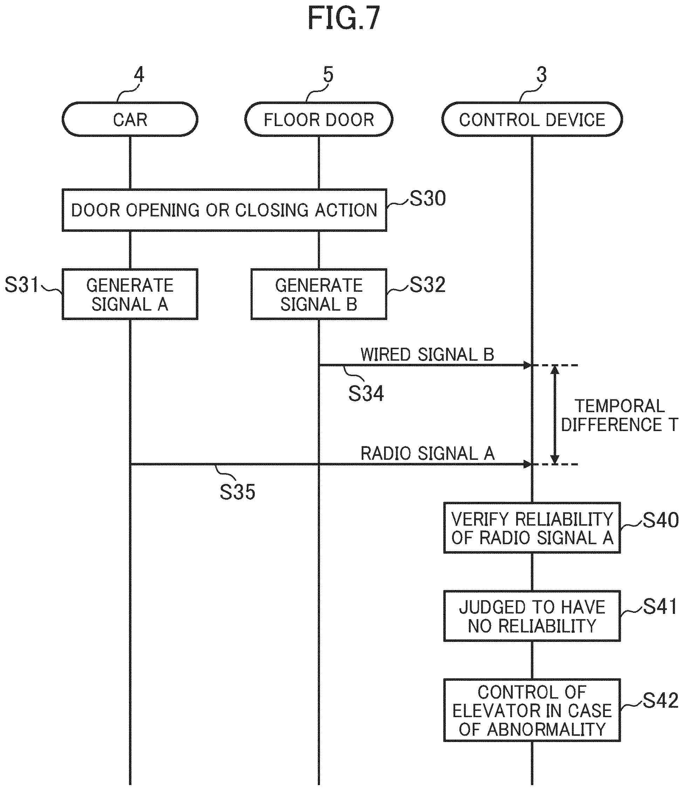

On the other hand, Fig. 7 in which elements corresponding to those in Fig. 6 appear, assigned identical reference designators, illustrates a flow or processing when the radio signal A has no reliability in the present elevator equipment 1. Because the processing contents of steps S30 to S35 are the same as in Fig. 6, their description is omitted here.

Upon receiving both the radio signal A and the wired signal B, the control device 3 verifies reliability of the radio signal A based on whether there is a match between the pieces of information carried respectively by these signals and whether or not the temporal difference T between the reception timings of these signals is below the receipt time difference threshold mentioned previously (S40) . If the reception timings of the radio signal A and the wired signal B are at or above the receipt time threshold, then the control device 3 judges that the radio signal A has no reliability (S41) and controls the elevator equipment 1 to perform an operation in case of abnormality detection (S42) .

### (2) Advantageous effects of the present embodiment

As described hereinbefore, in the elevator equipment 1 of the present embodiment, with respect to a physical action of door opening or closing, the car 4 transmits a door open or close signal as a radio signal A and the floor door 5 transmits a door open or close signal as a wired signal B to the control device 3, and these signals carry identical pieces of information. The control device 3 judges whether there is a match between the pieces of information respectively carried by these signals and whether or not the temporal difference T between the reception timings of these radio signal A and wired signal B is below the receipt time difference threshold that has been preset.

In this consequence, if quality of the radio signal A deteriorates so that the radio signal A cannot be received at proper timing, the temporal difference T between the reception timings of the radio signal A and the wired signal B becomes larger and, therefore, it can be judged whether or not reliability of the radio signal A deteriorates based on the temporal difference T.

Furthermore, assuming a case where a radio signal is affected by impersonation, it is hard for an impersonation attacker to generate and transmit a radio signal A corresponding to a physical action of the elevator equipment 1 in sync with occurrence of the physical action to the control device 3 and, therefore, it can be judged whether or not the radio signal is affected by impersonation based on both the pieces of information carried respectively by the radio signal A and the wired signal B and the temporal difference T between the reception timings.

Hence, according to the present embodiment, it is possible to accurately and exactly judge whether or not signal quality is deteriorated by interference or others and whether or not a radio signal is affected by impersonation and, thereby, it is possible to improve reliability of the elevator equipment 1.

### (3) Other embodiments

Note that, although the foregoing embodiment explained the case where the control device 3 that controls overall operation of the elevator equipment 1 judges reliability of a radio signal A, the present invention is not limited to this. A device capable of receiving both a radio signal A and a wired signal B may be installed separately and this device may judge reliability of the radio signal A and notify the control device 3 of a result of the judgment.

Besides, although the foregoing embodiment explained the case where the invention is applied to the elevator equipment 1, the present invention is not limited to this. The invention can broadly be applied to various systems in which it can be implemented to generate a radio signal and a wired signal with respect to one physical action, respectively, and judge reliability of the radio signal based on the pieces of information carried respectively by these radio signal and wired signal and the temporal difference between the reception timings.

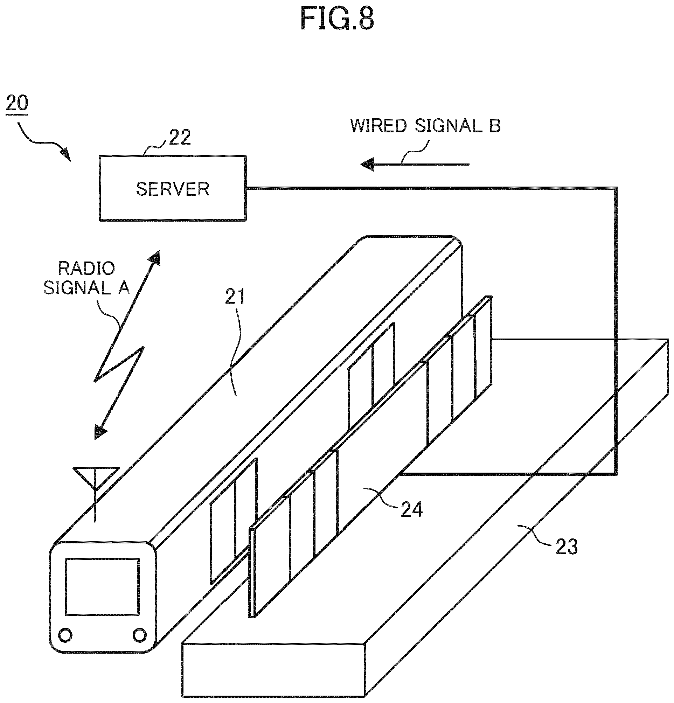

Fig. 8 depicts a structure example of a radio signal reliability judgment system 20 in which the present invention is applied to a conventional electric train operation control system. In this radio signal reliability judgment system 20, an electric train 21 is connected with a server 22 by radio. Platform doors 24 are installed in place on the platform 23, facing the railway track, and the platform doors 24 are controlled to open and close concurrently when the doors of the electric train 21 open and close.

In the radio signal reliability judgment system 20 in Fig. 8, the platform doors 24 are connected with the server 22 by wire and the server 22 monitors whether the doors of the electric train 21 and the platform doors 24 are opened and closed correctly. In this case, the electric train 21 corresponds to the car 4 in the foregoing embodiment, the platform doors 24 correspond to the floor door 5, and the server 22 corresponds to the control device 3, and the same processing as set forth in the foregoing embodiment is performed among the electric train 21, platform doors 24, and server 22.

Furthermore, the present invention can also be applied to a security system, as another embodiment, in which a train emergency stop signal that is generated by pressing a train emergency stop button, omitted from depiction, installed in a train station platform is transmitted by radio from a train emergency stop signal generating device to a train running by or near the platform. In that case, an event should be triggered to occur when an electric train 21 under verification has just passed by the front of a sensor installed in position inside the platform 23, instead of opening and closing of the platform doors 24 depicted in Fig. 8.

Then, if the temporal difference between timing at which an actual event occurs and timing of reception of the event has exceeded a predetermined threshold, it is judged that a train emergency stop signal as a radio signal received by the electric train 21 under verification is unreliable and the judgment is output. Timing of an event occurring, required for this, can also be acquired from a sensor in the electric train 21 side set to occur simultaneously with the sensor inside the platform 23. By this judgment, it is possible to reduce malicious attacks to cause emergency stop of a train running by or near platform 23 despite the absence of abnormality.

### Industrial Applicability

The present invention can broadly be applied to a variety of devices and systems, such as elevator equipment and operation control systems.

1: elevator equipment, 2: hoistway, 3: control device, 4: car, 5: floor door, 6: cable, 10: radio signal transmitting unit, 11: wired signal transmitting unit, 12: radio signal receiving unit, 13: wired signal receiving unit, 14: signal comparison unit, 15: elevator control unit, 16: sensor device, 20: radio signal reliability judgment system,21: electric train, 22: server, 23: platform, 24: platform door

## Claims

1. A judgment system for judging reliability of radio signals comprising:
a signal comparison unit that compares signals;
a radio signal transmitting unit that, upon occurrence of a predetermined first event, transmits a radio signal carrying a piece of information corresponding to the first event to the signal comparison unit; and
a wired signal transmitting unit that, upon occurrence of the first event or a second event occurring simultaneously or virtually simultaneously with the first event, transmits a wired signal carrying a piece of information corresponding to the first or the second event to the signal comparison unit;
**characterized in that** the signal comparison unit judges reliability of the radio signal based on the pieces of information respectively carried by the radio signal and the wired signal and a temporal difference between reception timings of the radio signal and the wired signal.

2. The judgment system according to claim 1, **characterized in that**:
the signal comparison unit judges that the radio signal has reliability, if there is a match between the pieces of information respectively carried by the radio signal and the wired signal and the temporal difference between reception timings of the radio signal and the wired signal is below a preset threshold.

3. The judgment system according to claim 3, **characterized in that**:
the radio signal transmitting unit is disposed in a car of elevator equipment;
the wired signal transmitting unit is disposed on a floor door of the elevator equipment; and
the first event is a door opening or closing action.

4. The judgment system according to claim 3, **characterized in that**:
the radio signal transmitting unit and the wired signal transmitting unit transmit the radio signal or the wired signal carrying a piece of information that differs between the door opening and the door closing to the signal comparison unit, respectively.

5. The judgment system according to claim 4, **characterized by** comprising:
an elevator control unit that controls the elevator equipment to perform a predetermined operation in case of abnormality detection, if the signal comparison unit judges that the radio signal has no reliability.

6. A judgment method for judging reliability of radio signals, comprising:
a first step in which, upon occurrence of a predetermined first event, a radio signal transmitting unit transmits a radio signal carrying a piece of information corresponding to the first event to a signal comparison unit and, upon occurrence of the first event or a second event occurring simultaneously or virtually simultaneously with the first event, a wired signal transmitting unit transmits a wired signal carrying a piece of information corresponding to the first or the second event to the signal comparison unit; and
a second step in which the signal comparison unit judges reliability of the radio signal based on the radio signal and the wired signal,
**characterized in that**:
in the second step, the signal comparison unit judges reliability of the radio signal based on the pieces of information respectively carried by the radio signal and the wired signal and a temporal difference between reception timings of the radio signal and the wired signal.

7. The judgment method according to claim 6, **characterized in that**:
in the second step, the signal comparison unit judges that the radio signal has reliability, if there is a match between the pieces of information respectively carried by the radio signal and the wired signal and the temporal difference between reception timings of the radio signal and the wired signal is below a preset threshold.

8. The judgment method according to claim 7, **characterized in that**:
the radio signal transmitting unit is disposed in a car of elevator equipment;
the wired signal transmitting unit is disposed on a floor door of the elevator equipment; and
the first event is a door opening or closing action.

9. The judgment method according to claim 8, **characterized in that**:
the radio signal transmitting unit and the wired signal transmitting unit transmit the radio signal or the wired signal carrying a piece of information that differs between the door opening and the door closing to the signal comparison unit, respectively.

10. The judgment method according to claim 9, **characterized by** further comprising:
a third step of controlling the elevator equipment to perform a predetermined operation in case of abnormality detection, if the signal comparison unit judges that the radio signal has no reliability.
